# EUROPÄISCHE PATENTSCHRIFT

(11) **EP 2 013 499 B1**
(45) Veröffentlichungstag und Bekanntmachung des Hinweises auf die Patenterteilung: **31.03.2010**
(21) Anmeldenummer: 07722222.2
(22) Anmeldetag: 17.04.2007
(51) Int. Cl.: F16C 33/36, F16C 19/26, F16C 43/06

(54) **RADIALWÄLZLAGER, INSBESONDERE EINREIHIGES KUGELROLLENLAGER, SOWIE VERFAHREN ZU DESSEN MONTAGE**
RADIAL ANTI FRICTION BEARING, IN PARTICULAR SINGLE-ROW SPHERICAL ROLLER BEARING, AND METHOD FOR MOUNTING THEREOF
PALIER A ROULEMENT RADIAL, EN PARTICULIER ROULEMENT À ROULEAUX SPHÉRIQUES À UNE SEULE RANGÉE, ET PROCÉDÉ D'ASSEMBLAGE ASSOCIÉ

(30) Priorität: 26.04.2006 DE 102006019228
(43) Veröffentlichungstag der Anmeldung: 14.01.2009
(73) Patentinhaber: Schaeffler KG, 91074 Herzogenaurach (DE)
(72) Erfinder: HOFMANN, Heinrich, 97422 Schweinfurt (DE); DÖPPLING, Horst, 97074 Herzogenaurach (DE); EIDLOTH, Rainer, 91074 Herzogenaurach (DE); GOPPELT, Georg, 91738 Pfofeld (DE)
(86) Internationale Anmeldenummer: PCT/DE2007/000664
(87) Internationale Veröffentlichungsnummer: WO 2007/121711

(56) Entgegenhaltungen:
- AT-B- 88 755
- DE-A1-102005 014 556
- GB-A- 1 369 501
- US-A1- 2005 117 827

## Beschreibung

### Gebiet der Erfindung

Die Erfindung betrifft ein für hohe Axialbelastungen geeignetes Radialwälzlager nach den oberbegriffsbildenden Merkmalen des Patentanspruchs 1 sowie ein Verfahren zur Montage eines solchen Radialwälzlagers, und sie ist insbesondere vorteilhaft an einreihigen Kugelrollenlagern realisierbar, die beispielsweise als Festlager in Kfz-Schaltgetrieben zur Anwendung kommen.

### Hintergrund der Erfindung

Als Radialwälzlager, die auch mit hohen Axialkräften belastbar sind, werden in der Praxis vor allem einreihige Rillenkugellager eingesetzt, da diese eine gleichermaßen hohe radiale und axiale Tragfähigkeit, eine geringe Reibung und die höchsten Drehzahlgrenzen aller Lägerarten aufweisen. Diese Rillenkugellager bestehen in bekannter Weise aus einem äußeren Lagerring und einem inneren Lagerring sowie aus einer Anzahl zwischen den Lagerringen angeordneter Lagerkugeln als Wälzkörpern. Dabei sind in die Innenseite des äußeren Lagerrings und in die Außenseite des inneren Lagerrings jeweils rillenförmige Laufbahnen eingearbeitet, welche durch jeweils zwei axiale Borde begrenzt sind und in denen die Lagerkugeln durch einen Lagerkäfig in gleichmäßigen Abständen zueinander geführt werden. Das Einsetzten der Lagerkugeln in das Rillenkugellager erfolgt dabei zumeist durch das mit der DE 168 499 bekannt gewordene Exzentermontageverfahren, bei dem die beiden Lagerringe exzentrisch zueinander angeordnet werden und der dadurch entstehende freie Raum zwischen den Lagerringen mit den Lagerkugeln befüllt wird. Danach wird der innere Lagerring unter Ausnutzung der Elastizität beider Lagerringe in die zum äußeren Lagerring konzentrische Stellung gebracht, so dass die Lagerkugeln abschließend in den Laufbahnen der Lagerringe gleichmäßig verteilt werden können und der Lagerkäfig eingesetzt werden kann.

In der Praxis hat es sich jedoch erwiesen, dass derartigen Rillenkugellagern aufgrund der geringen maximal einbaubaren Anzahl von Kugeln, die von den Abmessungen des inneren und des äußeren Lagerrings sowie dem Kugeldurchmesser abhängig ist, vor allem in Bezug auf die radiale Tragfähigkeit des Lagers dennoch Grenzen gesetzt sind. In der Vergangenheit wurden daher eine Vielzahl von Lösungen, wie beispielsweise eine in den sich gegenüberliegenden Borden der Laufbahnen des äußeren und des inneren Lagerrings angeordnete unverschlossene Einfüllöffnung gemäß DE 151 483 oder eine ähnlich ausgebildete verschließbare Einfüllöffnung gemäß DE 24 07 477 A1, vorgeschlagen, mit denen durch eine Erhöhung der Anzahl der Kugeln eine Erhöhung der radialen Tragfähigkeit von Rillenkugellagern erreicht werden sollte, die sich aber aufgrund zahlreicher Nachteile in der Praxis nicht durchsetzen konnten.

Eine andere Möglichkeit, die Anzahl der Wälzkörper an einem Radialwälzlager zu erhöhen, wurde darüber hinaus durch die DE 311 317 erstmals bekannt und durch die DE 43 34 195 A1 weiterentwickelt. Bei diesen Radialwälzlagern, die ähnlich einreihigen Rillenkugellagern ausgebildet sind, werden die Wälzkörper jedoch nicht durch Kugeln sondern durch so genannte Kugelrollen gebildet, die mit zwei symmetrisch von einer Kugelgrundform abgeflachten sowie parallel zueinander angeordneten Seitenflächen ausgebildet sind. Die Breite dieser Kugelrollen zwischen deren Seitenflächen ist dabei geringer als der Abstand zwischen den sich radial gegenüberliegenden axialen Borden der Laufbahnen in den Lagerringen ausgebildet, so dass das Befüllen des Lagers mit den Kugelrollen im so genannten Axialmontageverfahren erfolgen kann, bei dem die Kugelrollen axial durch den Abstand zwischen Innenring und Außenring in das Lager eingeführt werden können. Wenn sich der Mittelpunkt der Kugelrollen dann auf der Höhe der Laufbahnachse befindet, werden die Kugelrollen einmal vertikal und einmal horizontal um 90° gedreht, so dass sie mit ihren Laufflächen in den Laufbahnen der Lagerringe abrollen können.

Trotz der Möglichkeit, diese speziell ausgebildeten Kugelrollen axial in das Lager einzusetzen und das Radialwälzlager damit nahezu vollständig mit einer hohen Anzahl an Wälzkörpern ausfüllen und für hohe Radiallasten nutzen zu können, stellt ein solches Kugelrollenlager jedoch im Hinblick auf die axiale Tragfähigkeit des Lagers allenfalls nur einen Kompromiss dar. Dies ist in der Tatsache begründet, dass die Kugelrollen wegen ihrer axialen Einführbarkeit in das Lager nur mit einer kleinen Breite zwischen ihren Seitenflächen und die Laufbahnen der Kugelrollen in den Lagerringen nur relativ flach ausgebildet werden können, um das Drehen der Wälzkörper in ihre Betriebslage ermöglichen zu können, ohne dass ein zu hohes Radialspiel im gesamten Lager entsteht. Die relativ flachen Laufbahnen der Kugelrollen bewirken jedoch, dass den Kugelrollen bei Anpassung an einen axial wirkenden Betriebsdruckwinkel durch Axialverkippung innerhalb ihrer Laufbahnen zu wenig Stützfläche zur Verfügung steht, so dass vor allem die axiale Tragfähigkeit eines solchen Kugelrollenlagers sehr gering ist und derartige Kugelrollenlager somit für hohe Axiallasten ungeeignet sind.

Zur Vermeidung dieser Nachteile wurde es deshalb durch die zum Anmeldezeitpunkt der vorliegenden Patentanmeldung noch nicht veröffentlichte deutsche Patentanmeldung mit dem Aktenzeichen 10 2005 014 556.6 vorgeschlagen, die Breite der Kugelrollen zwischen deren Seitenflächen auf mindestens 70 % des Durchmessers ihrer Kugelgrundform zu vergrößern und die rillenförmigen Laufbahnen der Kugelrollen in den Lagerringen mit einer Tiefe zwischen 17 % und 19% sowie einer Breite zwischen 75 %und 78 % des Durchmessers der Kugelgrundform der Kugelrollen auszubilden, da damit eine sowohl die radiale als auch die axiale Tragfähigkeit des Lagers erhöhende Gesamtkontaktfläche der Kugelrollen zu ihren Laufbahnen von etwa 45 % des Umfangs der Kugelgrundform der Kugelrollen entsteht, wie sie auch die Kugeln herkömmlicher Rillenkugellager zu ihren Laufbahnen in den Lagerringen aufweisen. Da der Abstand zwischen den die Wälzkörperlaufbahnen begrenzenden Borden des inneren und des äußeren Lagerrings dadurch jedoch kleiner als die Breite der Kugelrollen wird, muss das Einsetzen der Kugelrollen in das Radialwälzlager wieder nach dem bekannten Exzentermontageverfahren erfolgen, bei dem die Kugelrollen in einer senkrechten Stellung an der Stelle des größten Abstandes der sich radial gegenüberliegenden Borde der beiden exzentrisch zueinander angeordneten Lagerringe quer in die Wälzkörperlaufbahnen eingelegt und mit ihren Seitenflächen aneinander anliegend in den freien Raum zwischen den Lagerringen verschoben werden. Die abgeflachten Seitenflächen der Kugelrollen ermöglichen es dabei jedoch, dass auch mit dem Exzentermontageverfahren eine erhöhte Anzahl an Wälzkörpern gegenüber einreihigen Rillenkugellagern im Lager montierbar ist. Nach dem Befüllen des Lagers mit den Kugelrollen wird der innere Lagerring dann in die zum äußeren Lagerring konzentrische Stellung gebracht, so dass die Kugelrollen auf dem Teilkreis ihrer Laufbahnen mit gleichmäßigem Abstand zueinander verteilt und in ihre längs zu den Laufbahnen angeordnete Betriebsstellung um 90° verschwenkt werden können, um abschließend den Lagerkäfig in das Radialwälzlager einzusetzen.

Mit einem derart ausgebildeten Kugelrollenlager wurde zwar erreicht, dass die Kugelrollen große Kontaktflächen zu ihren Laufbahnen in den Lagerringen aufweisen und dass das Lager mit einer höheren Anzahl an Wälzkörpern als herkömmliche einreihige Rillenkugellager bestückt werden kann, so dass vor allem die radiale Tragfähigkeit des Lagers gegenüber herkömmlichen Rillenkugellagern erhöht und der axiale Bauraum und das Gewicht des Lagers verringert wurde. Dennoch fiel die Erhöhung der axialen Tragfähigkeit des Lagers vergleichsweise gering aus. da die zwar vertieften Laufbahnen der Kugelrollen immer noch zu flach sind, um die Kugelrollen bei Anpassung an den wirkenden Betriebsdruckwinkel durch Axialverkippung innerhalb ihrer Laufbahnen vollständig abzustützen, so dass derartige Kugelrollenlager nach wie vor für variable Axiallasten unter extrem hohen Betriebsdruckwinkeln ungeeignet sind.

Ein gattungsähnliches Radialwälzlager ist auch aus der GB 1 369 501 bekannt.

### Aufgabe der Erfindung

Ausgehend von den dargelegten Nachteilen der Lösungen des bekannten Standes der Technik liegt der Erfindung deshalb die Aufgabe zu Grunde, ein Radialwälzlager, insbesondere einreihiges Kugelrollenlager, zu konzipieren, welches neben einer hohen radialen Tragfähigkeit auch für variable Axiallasten unter hohen Betriebsdruckwinkeln beidseitig der Lagerlängsachse geeignet ist.

### Beschreibung der Erfindung

Erfindungsgemäß wird diese Aufgabe bei einem Radialwälzlager mit den Merkmalen des Oberbegriff des Anspruchs 1 derart gelöst, dass die Laufbahnen in beiden Lagerringen mit einer derart extrem vergrößerten Tiefe und Breite ausgebildet sind, dass die Kugelrollen auch bei variablen Axiallasten unter einem Betriebsdruckwinkel von bis zu 25° beidseitig der Lagerlängsachse mit ihren Laufflächen im vollständigen Linienkontakt zu den Laufbahnen in den Lagerringen stehen und dabei der Abstand zwischen den sich radial gegenüberliegenden axialen Borden der Laufbahnen in den Lagerringen so gering ist, dass dieser selbst bei exzentrisch zueinander angeordneten Lagerringen kleiner ist als der Durchmesser der Kugelgrundform der Kugelrollen.

Bevorzugte Ausgestaltungen und Weiterbildungen des erfindungsgemäß ausgebildeten Radialwälzlagers werden in den Unteransprüchen beschrieben.

Danach ist es gemäß den Ansprüchen 2 und 3 bei dem erfindungsgemäß ausgebildeten Radialwälzlager vorgesehen, dass die Laufbahnen in der Innenseite des äußeren Lagerrings und in der Außenseite des inneren Lagerrings eine Tiefe größer 25% des Durchmessers der Kugelgrundform der Kugelrollen aufweisen, während die Breite der Laufbahnen in den Lagerringen mehr als 85% des Durchmessers der Kugelgrundform der Kugelrollen beträgt. Die Ausbildung der Laufbahnen mit derartigen Abmessungen geht dabei deutlich über die Laufbahnabmessungen herkömmlicher Rillenkugellagern hinaus und gewährleistet, dass die Kugelrollen abhängig von der Radiallagerluft auch bei Betriebsdruckwinkein bis zu 25° einen hundertprozentigen Schmiegungsgrad zu ihren Laufbahnen aufweisen und das Lager somit bei voller radialer Belastbarkeit eine extrem hohe axiale Tragfähigkeit erhält.

Nach den Ansprüchen 4 und 5 zeichnet sich das erfindungsgemäß ausgebildete Radialwälzlagers auch noch dadurch aus, dass bei konzentrischer Anordnung der Lagerringe zueinander der Abstand zwischen den sich radial gegenüberliegenden axialen Borden der Laufbahnen nur etwa 40% bis 50 % des Durchmessers der Kugelgrundform der Kugelrollen beträgt, während bei exzentrischer Anordnung der Lagerringe zueinander der größte Abstand zwischen diesen axialen Borden zwischen 75% bis 90% des Durchmessers der Kugelgrundform der Kugelrollen beträgt. Bei einer Breite der Kugelrollen zwischen ihren Seitenflächen von 70 % ihrer Kugelgrundform scheint es somit zunächst unmöglich, die Kugelrollen weder nach dem bekannten Axialmontageverfahren noch nach dem herkömmlichen Exzentermontageverfahren in das Radialwälzlager einbringen zu können, da für beide Verfahren der Abstand zwischen den Borden der Laufbahnen zu klein ist.

Das erfindungsgemäße Verfahren zur Montage eines solchen Radialwälzlagers nach Anspruch 6 stellt deshalb ein modifiziertes Exzentermontageverfahren für Kugelrollen dar, bei dem zunächst in bekannter Weise das Einlegen des inneren Lagerrings in den äußeren Lagerring und das Anordnen der Lagerringe in eine exzentrische Lage zueinander auf einer gemeinsamen Radialachse erfolgt. Im Unterschied zu dem bekannten Exzentermontageverfahren erfolgt dann jedoch das Einschieben einer ersten Kugelrolle nicht in senkrechter sondern in tangentialer Lage der Seitenflächen zu den Lagerringen an der Stelle des größten Abstandes der sich radial gegenüberliegenden Borde der Lagerringe, um anschließend diese erste Kugelrolle um 90° in die Laufbahnen der Lagerringe in eine quer zu diesen stehende Stellung zu verkippen und in dieser Stellung in eine erste seitliche Zwischenstellung zwischen den Lagerringen zu verschieben. Danach wird eine zweite Kugelrolle in tangentialer Lage der Seitenflächen zu den Lagerringen an der Stelle des größten Abstandes der Borde zwischen die Lagerringe geschoben, um ebenfalls um 90° in die Laufbahnen der Lagerringe in eine quer zu diesen stehende Stellung verkippt und in dieser Stellung in eine zweite seitliche Zwischenstellung zwischen den Lagerringen verschoben zu werden.

Die vorgenannten Schritte werden dann bis zur maximal möglichen Befüllung des Radialwälzlagers mit Kugelrollen abwechselnd wiederholt, so dass anschließend wieder das an sich vom Exzentermontageverfahren her bekannte Verschieben des inneren Lagerrings in eine zum äußeren Lagerring konzentrische Stellung erfolgen kann. Danach werden dann alle eingesetzten Kugelrollen in ihrer quer zu den Laufbahnen stehenden Stellung auf dem gesamten Umfang der Laufbahnen der Lagerringe bzw. auf ihrem Teilkreis in gleichmäßigen Abständen verteilt und durch Drehen um 90° in ihre längs zu den Laufbahnen angeordnete Betriebstellung gebracht, so dass abschließend das Einsetzen des Lagerkäfigs durch den Abstand zwischen den Borden der Lagerringe hindurch erfolgen kann.

Das erfindungsgemäß ausgebildete Kugelrollenlager weist somit gegenüber den aus dem Stand der Technik bekannten Kugelrollenlagern den Vorteil auf, dass es durch die Ausbildung mit sehr tiefen und sehr breiten Laufbahnen für die Kugelrollen in Kombination mit der Ausbildung der Kugelrollen mit einer optimalen Breite von 70% des Durchmessers ihrer Kugelgrundform nunmehr neben einer hohen radialen Tragfähigkeit auch für variable Axiallasten unter hohen Betriebsdruckwinkeln beidseitig der Lagerlängsachse geeignet ist.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: eine räumliche Gesamtansicht eines erfindungsgemäß ausgebildeten Kugelrollenlagers;
- Figur 2: einen Querschnitt durch das erfindungsgemäß ausgebildete Kugelrollenlager;
- Figur 3: eine vergrößerte Darstellung einer Hälfte des Querschnitts durch das erfindungsgemäß ausgebildete Kugelrollenlager gemäß Einzelheit X in Figur 2;
- Figur 4: eine Seitenansicht des erfindungsgemäß ausgebildeten Kugelrollenlagers bei der Montage der Kugelrollen;
- Figur 5: einen Querschnitt des erfindungsgemäß ausgebildeten Kugelrollenlagers bei der Montage der Kugelrollen.

### Ausführliche Beschreibung der Zeichnungen

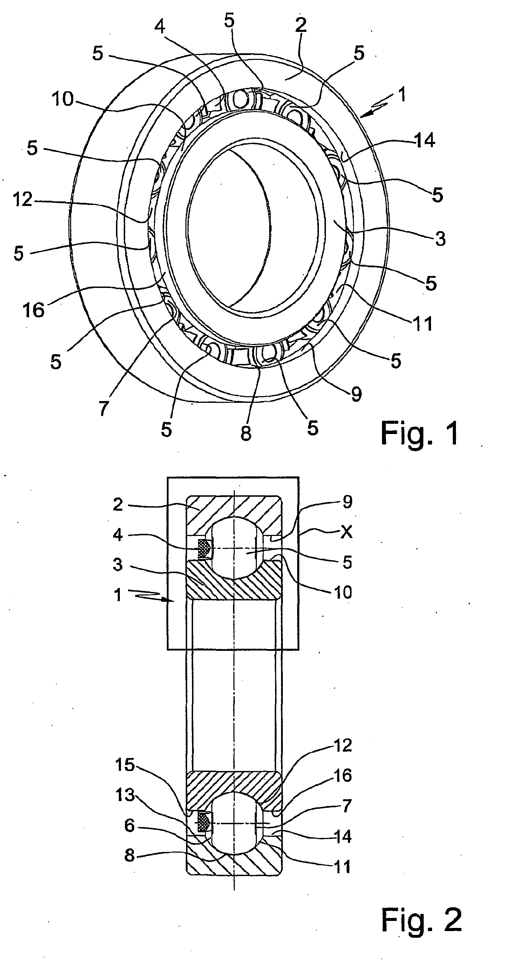

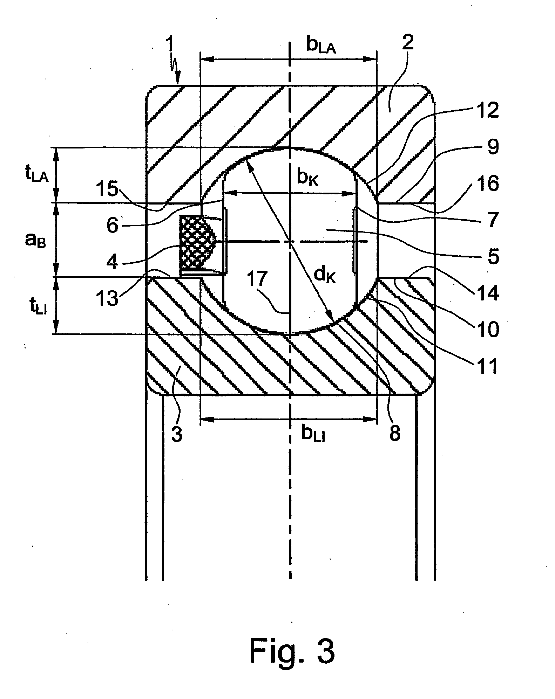

Aus den Figuren 1 und 2 geht deutlich ein als einreihiges Kugelrollenlager ausgebildetes Radialwälzlager 1 hervor, welches im Wesentlichen aus einem äußeren Lagerring 2 und einem inneren Lagerring 3 sowie aus einer Vielzahl zwischen diesen Lagerringen 2, 3 angeordneter Kugelrollen 5 besteht, die jeweils zwei symmetrisch von einer Kugelgrundform abgeflachte, parallel zueinander angeordnete Seitenflächen 6, 7 aufweisen. Diese Kugelrollen 4 werden deutlich sichtbar durch einen Lagerkäfig 4 in Umfangsrichtung in gleichmäßigen Abständen zueinander gehalten und rollen mit ihren Laufflächen 8 in zwei in die Innenseite 9 des äußeren Lagerrings 2 und in die Außenseite 10 des inneren Lagerrings 3 eingearbeitete rillenförmigen Laufbahnen 11, 12 ab, welche durch jeweils zwei axiale Borde 13, 14 und 15, 16 begrenzt sind. Die Kugelrollen 5 weisen dabei, wie aus Figur 3 hervorgeht, zwischen ihren Seitenflächen 6, 7 eine Breite b_{K} von 70% des Durchmessers d_{K} ihrer Kugelgrundform auf und sind damit breiter als der Abstand a_{B} zwischen den sich radial gegenüberliegenden axialen Borden 13, 15 und 14, 16 der Laufbahnen 11,12 in den Lagerringen 2, 3.

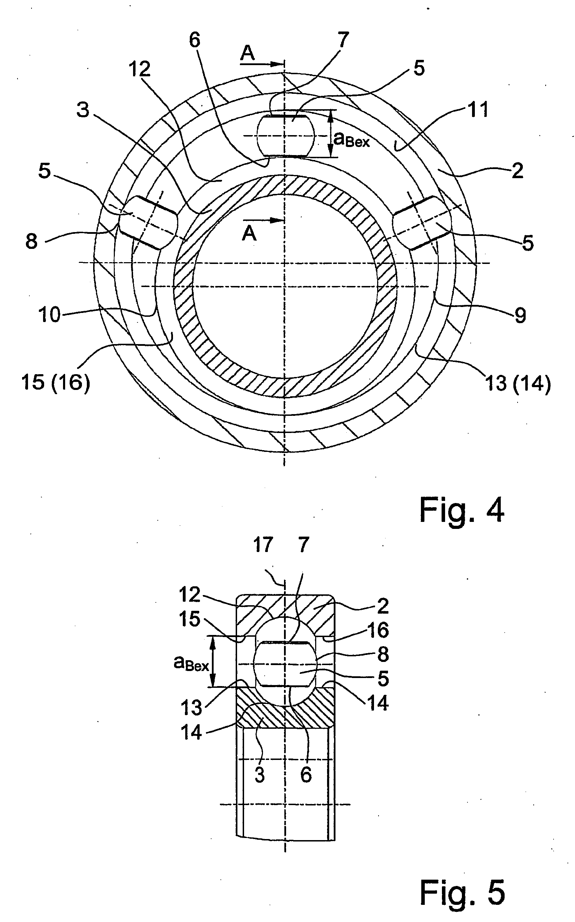

Um ein derart ausgebildetes Radialwälzlager 1 mit einer sehr hohen axialen Tragfähigkeit auszubilden, sind die Laufbahnen 11, 12 in beiden Lagerringen 2, 3, wie den Figuren 2 und 3 entnehmbar ist, erfindungsgemäß mit einer derart extrem vergrößerten Tiefe t_{LA}, t_{LI} und Breite b_{LA}, b_{LI} ausgebildet, dass die Kugelrollen 5 auch bei variablen Axiallasten unter einem Betriebsdruckwinkel von bis zu 25° beidseitig der Lagerlängsachse 17 mit ihren Laufflächen 8 im vollständigen Linienkontakt zu den Laufbahnen 11, 12 in den Lagerringen 2, 3 stehen. Dabei wird der in Figur 3 dargestellte Abstand a_{B} zwischen den sich radial gegenüberliegenden axialen Borden 13, 15 und 14, 16 der Laufbahnen 11, 12 in den Lagerringen 2, 3 so gering gehalten, dass selbst bei einer wie in Figur 4 dargestellten exzentrischen Anordnung der Lagerringe 2, 3 zueinander der Abstand a_{Bex} kleiner ist als der Durchmesser d_{K} der Kugelgrundform der Kugelrollen 5.

Als konkrete Ausführung wird dabei durch Figur 3 deutlich, dass die Tiefe t_{LA}, t_{LI} der Laufbahnen 11, 12 in der Innenseite 9 des äußeren Lagerrings 2 und in der Außenseite 10 des inneren Lagerrings 3 etwa 30% des Durchmessers d_{K} der Kugelgrundform der Kugelrollen 5 beträgt, während die Breite b_{LA}, b_{LI} der Laufbahnen 11, 12 etwa 90% des Durchmessers d_{K} der Kugelgrundform der Kugelrollen 5 beträgt. Ebenso geht aus dieser Zeichnung hervor, dass bei der dargestellten konzentrischen Anordnung der Lagerringe 2, 3 zueinander der Abstand a_{B} zwischen den sich radial gegenüberliegenden axialen Borden 13, 15 und 14, 16 der Laufbahnen 11, 12 nur etwa 40% des Durchmessers d_{K} der Kugelgrundform der Kugelrollen 5 beträgt, während bei der in Figur 4 abgebildeten exzentrischer Anordnung der Lagerringe 2, 3 zueinander der größte Abstand a_{Bex} zwischen diesen axialen Borden etwa 80% des Durchmessers d_{K} der Kugelgrundform der Kugelrollen 5 beträgt. Durch die Ausbildung der Laufbahnen 11, 12 mit derartigen Abmessungen weisen die Kugelrollen 5 auch bei Betriebsdruckwinkeln bis zu 25° einen hundertprozentigen Schmiegungsgrad zu ihren Laufbahnen 11, 12 auf und gewährleisten somit bei voller radialer Belastbarkeit eine extrem hohe axiale Tragfähigkeit des Lagers, gleichzeitig sind aber die Kugelrollen 5 nach den herkömmlichen bekannten Axial- oder Exzentermontageverfahren aufgrund des zu kleinen Abstandes a_{B} oder a_{Bex} zwischen den axialen Borden 13, 15 und 14, 16 der Laufbahnen 11, 12 nicht mehr montierbar.

Die Montage der Kugelrollen 5 erfolgt deshalb bei einem derart ausgebildeten Radialwälzlager 1 erfindungsgemäß nach einem modifizierten Exzentermontageverfahren, bei dem zunächst das in Figur 4 dargestellte bekannte Einlegen des inneren Lagerrings 3 in den äußeren Lagerring 2 und das Anordnen der Lagerringe 2, 3 in einer exzentrischen Lage zueinander auf einer gemeinsamen Radialachse erfolgt. Neu bei diesem Exzentermontageverfahren ist jedoch, dass danach das Einschieben einer ersten Kugelrolle 5 in einer in den Figuren 4 und 5 gezeigten tangentialen Lage der Seitenflächen 6, 7 zu den Lagerringen 2, 3 an der Stelle des größten Abstandes a_{Bex} der sich radial gegenüberliegenden Borde 13, 15 und 14, 16 der Lagerringe 2, 3 erfolgt, um anschließend diese erste Kugelrolle 5 um 90° in die Laufbahnen 11, 12 der Lagerringe 2, 3 in eine quer zu diesen stehende Stellung zu verkippen und in dieser Stellung in eine erste, in Figur 4 links der senkrechten Mittelachse dargestellte, seitliche Zwischenstellung zwischen den Lagerringen 2, 3 zu verschieben. Danach wird eine zweite Kugelrolle 5 in tangentialer Lage der Seitenflächen 6, 7 zu den Lagerringen 2, 3 an der Stelle des größten Abstandes a_{Bex} der Borde 13, 15 und 14, 16 zwischen die Lagerringe 2, 3 geschoben, um ebenfalls um 90° in die Laufbahnen11, 12 der Lagerringe 2, 3 in eine quer zu diesen stehende Stellung verkippt und in dieser Stellung in eine zweite, in Figur 4 rechts der senkrechten Mittelachse dargestellte, seitliche Zwischenstellung zwischen den Lagerringen 2, 3 verschoben zu werden.

Es erfolgt dann eine abwechselnde Wiederholung der vorgenannten Schritte bis zur maximal möglichen Befüllung des Radialwälzlagers 1 mit Kugelrollen 5, so dass anschließend das an sich bekannte Verschieben des inneren Lagerrings 3 in eine zum äußeren Lagerring 2 konzentrische Stellung erfolgen kann. Danach werden alle eingesetzten Kugelrollen 5 in ihrer quer zu den Laufbahnen 11, 12 stehenden Stellung auf ihrem Teilkreis in gleichmäßigen Abständen verteilt und durch Drehen um 90° in ihre in Figur 1 abgebildete, längs zu den Laufbahnen 11, 12 angeordnete Betriebstellung gebracht, so dass abschließend das Einsetzen des Lagerkäfigs 4 durch den Abstand a_{B} zwischen den Borden 13, 15 und 14, 16 der Lagerringe 2, 3 hindurch erfolgen kann.

### Bezugszahlenliste

- 1: Radialwälzlager
- 2: äußerer Lagerring
- 3: innerer Lagerring
- 4: Lagerkäfig
- 5: Kugelrollen
- 6: Seitenfläche von 5
- 7: Seitenfläche von 5
- 8: Lauffläche von 5
- 9: Innenseite von 2
- 10: Außenseite von 3
- 11: Laufbahn in 9
- 12: Laufbahn in 10
- 13: Bord von 11
- 14: Bord von 11
- 15: Bord von 12
- 16: Bord von 12
- 17: Lagerlängsachse
- b_{K}: Breite von 5
- d_{K}: Durchmesser der Kugelgrundform von 5
- t_{LA}: Tiefe von 11
- t_{LI}: Tiefe von 12
- b_{LA}: Breite von 11
- b_{LI}: Breite von 12
- a_{B}: Abstand zwischen 13 und 15 bzw. 14 und 16
- a_{Bex}: Abstand zwischen 13 und 15 bzw. 14 und 16 bei exzentrischer Anordnung von 2 und 3

## Patentansprüche

1. Radialwälzlager, insbesondere einreihiges Kugelrollenlager, welches im Wesentlichen aus einem äußeren Lagerring (2) und einem inneren Lagerring (3) sowie aus einer Vielzahl zwischen diesen Lagerringen (2, 3) angeordneter, durch einen Lagerkäfig (4) in Umfangsrichtung in gleichmäßigen Abständen zueinander gehaltener Kugelrollen (5) besteht, die jeweils zwei symmetrisch von einer Kugelgrundform abgeflachte, parallel zueinander angeordnete Seitenflächen (6, 7) aufweisen und mit ihren Laufflächen (8) in zwei in die Innenseite (9) des äußeren Lagerrings (2) und in die Außenseite (10) des inneren Lagerrings (3) eingearbeitete, rillenförmigen Laufbahnen (11, 12) abrollen, welche durch jeweils zwei axiale Borde (13, 14 und 15, 16) begrenzt sind, wobei die Breite (b_{K}) der Kugelrollen (5) zwischen ihren Seitenflächen (6, 7) mindestens 70% des Durchmessers (d_{K}) ihrer Kugelgrundform beträgt und größer ist als der Abstand (a_{B}) zwischen den sich radial gegenüberliegenden axialen Borden (13, 15 und 14, 16) der Laufbahnen (11, 12) in den Lagerringen (2, 3), **dadurch gekennzeichnet, dass** die Laufbahnen (11, 12) in beiden Lagerringen (2, 3) mit einer derart extrem vergrößerten Tiefe (t_{LA}, t_{LI}) und Breite (b_{LA}, b_{LI}) ausgebildet sind, dass die Kugelrollen (5) auch bei variablen Axiallasten unter einem Betriebsdruckwinkel von bis zu 25° beidseitig der Lagerlängsachse (17) mit ihren Laufflächen (8) im vollständigen Linienkontakt zu den Laufbahnen (11, 12) in den Lagerringen (2, 3) stehen und dabei der Abstand (a_{B}) zwischen den sich radial gegenüberliegenden axialen Borden (13, 15 und 14, 16) der Laufbahnen (11, 12) in den Lagerringen (2, 3) so gering ist, dass der Abstand (a_{Bex}) selbst bei exzentrisch zueinander angeordneten Lagerringen (2, 3) kleiner ist als der Durchmesser (d_{K}) der Kugelgrundform der Kugelrollen (5).

2. Radialwälzlager nach Anspruch 1, **dadurch gekennzeichnet, dass** die Lauf-bahnen (11, 12) in der Innenseite (9) des äußeren Lagerrings (2) und in der Außenseite (10) des inneren Lagerrings (3) eine Tiefe (t_{LA}, tu) größer 25% des Durchmessers (d_{K}) der Kugelgrundform der Kugelrollen (5) aufweisen.

3. Radialwälzlager nach Anspruch 2, **dadurch gekennzeichnet, dass** die Lauf-bahnen (11, 12) in der Innenseite (9) des äußeren Lagerrings (2) und in der Außenseite (10) des inneren Lagerrings (3) eine Breite (b_{LA}, b_{LI}) größer 85% des Durchmessers (d_{K}) der Kugelgrundform der Kugelrollen (5) aufweisen.

4. Radialwälzlager nach Anspruch 3, **dadurch gekennzeichnet, dass** bei konzentrischer Anordnung der Lagerringe (2, 3) zueinander der Abstand (a_{B}) zwischen den sich radial gegenüberliegenden axialen Borden (13, 15 und 14, 16) der Laufbahnen (11, 12) nur etwa 40% bis 50 % des Durchmessers (d_{K}) der Kugelgrundform der Kugelrollen (5) beträgt.

5. Radialwälzlager nach Anspruch 4, **dadurch gekennzeichnet, dass** bei exzentrischer Anordnung der Lagerringe (2, 3) zueinander der größte Abstand (a_{Bex}) zwischen den sich radial gegenüberliegenden axialen Borden (13, 15 und 14, 16) der Laufbahnen (11, 12) zwischen 75% bis 90% des Durchmessers (d_{K}) der Kugelgrundform der Kugelrollen (5) beträgt.

6. Verfahren zur Montage eines Radialwälzlagers mit den Merkmalen des Anspruchs 1, bei dem zunächst das Einlegen des inneren Lagerrings (3) in den äußeren Lagerring (2) und Anordnen der Lagerringe (2, 3) in eine exzentrische Lage zueinander auf einer gemeinsamen Radialachse erfolgt, mit folgenden weiteren Schritten:
a) Einschieben einer ersten Kugelrolle (5) in tangentialer Lage der Seitenflächen (6, 7) zu den Lagerringen (2, 3) an der Stelle des größten Abstandes (a_{Bex}) der sich radial gegenüberliegenden Borde (13, 15 und 14, 16) der Lagerringe (2, 3),
b) Verkippen der ersten Kugelrolle (5) um 90° in die Laufbahnen (11, 12) der Lagerringe (2, 3) in eine quer zu diesen stehende Stellung und Verschieben der Kugelrolle (5) in dieser Stellung in eine erste seitliche Zwischenstellung zwischen den Lagerringen (2, 3),
c) Einschieben einer zweiten Kugelrolle (5) in tangentialer Lage der Seitenflächen (6, 7) zu den Lagerringen (2, 3) an der Stelle des größten Abstandes (a_{Bex}) der sich axial gegenüberliegenden Borde (13, 15 und 14, 16) der Lagerringe (2, 3),
d) Verkippen der zweiten Kugelrolle (5) um 90° in die Laufbahnen (11, 12) der Lagerringe (2, 3) in eine quer zu diesem stehende Stellung und Verschieben der Kugelrolle in dieser Stellung in eine zweite seitliche Zwischenstellung zwischen den Lagerringen (2, 3),
e) Abwechselnde Wiederholung der Schritte a) und b) sowie c) und d) bis zu maximal möglichen Befüllung des Radialwälzlagers (1) mit Kugelrollen (5) und anschließendes Verschieben des inneren Lagerrings (3) in eine zum äußeren Lagerring (2) konzentrische Stellung,
f) Verteilen aller eingesetzten Kugelrollen (5) in der quer zu den Laufbahnen (11, 12) stehen Stellung auf dem gesamten Umfang der Laufbahnen (11, 12) der Lagerringe (2, 3) in gleichmäßigen Abständen,
g) Drehen der eingesetzten Kugelrollen (5) um 90° in ihre längs zu den Laufbahnen (11, 12) angeordnete Betriebstellung und abschließendes Einsetzen des Lagerkäfigs (4) durch den Abstand (a_{B}) zwischen den Borden (13, 14 und 15, 16) der Lagerringe (2, 3) hindurch.

## Claims

1. Radial anti-friction bearing, in particular single-row spherical roller bearing, which is composed substantially of an outer bearing ring (2) and an inner bearing ring (3) and of a plurality of spherical rollers (5) which are arranged between said bearing rings (2, 3) and which are held with uniform spacings to one another in the circumferential direction by a bearing cage (4) and which have in each case two side surfaces (6, 7) flattened symmetrically from a spherical basic shape and arranged parallel to one another and which roll in two channel-shaped raceways (11, 12) which are formed into the inner side (9) of the outer bearing ring (2) and into the outer side (10) of the inner bearing ring (3) and which are delimited by in each case two axial rims (13, 14 and 15, 16), with the width (b_{K}) of the spherical rollers (5) between their side surfaces (6, 7) amounting to at least 70% of the diameter (d_{K}) of their spherical basic shape and being greater than the spacing (a_{B}) between the radially opposite axial rims (13, 15 and 14, 16) of the raceways (11, 12) in the bearing rings (2, 3), **characterized in that** the raceways (11, 12) in the two bearing rings (2, 3) are formed with an extremely enlarged depth (t_{LA}, t_{LI}) and width (b_{LA}, b_{LI}) which is such that, even in the event of variable axial loads under an operating pressure angle of up to 25° to both sides of the bearing longitudinal axis (17), the spherical rollers (5) are in full linear contact by means of their running surfaces (8) with the raceways (11, 12) in the bearing rings (2, 3), and here, the spacing (a_{B}) between the radially opposite axial rims (13, 15 and 14, 16) of the raceways (11, 12) in the bearing rings (2, 3) is so small that, even in the event of the bearing rings (2, 3) being arranged eccentrically with respect to one another, the spacing (a_{Bex}) is smaller than the diameter (d_{K}) of the spherical basic shape of the spherical rollers (5).

2. Radial anti-friction bearing according to Claim 1, **characterized in that** the raceways (11, 12) in the inner side (9) of the outer bearing ring (2) and in the outer side (10) of the inner bearing ring (3) have a depth (t_{LA}, t_{LI}) of greater than 25% of the diameter (d_{K}) of the spherical basic shape of the spherical rollers (5).

3. Radial anti-friction bearing according to Claim 2, **characterized in that** the raceways (11, 12) in the inner side (9) of the outer bearing ring (2) and in the outer side (10) of the inner bearing ring (3) have a width (b_{LA}, b_{LI}) of greater than 85% of the diameter (d_{K}) of the spherical basic shape of the spherical rollers (5).

4. Radial anti-friction bearing according to Claim 3, **characterized in that**, in the case of a concentric arrangement of the bearing rings (2, 3) with respect to one another, the spacing (a_{B}) between the radially opposite axial rims (13, 15 and 14, 16) of the raceways (11, 12) amounts to only approximately 40% to 50% of the diameter (d_{K}) of the spherical basic shape of the spherical rollers (5).

5. Radial anti-friction bearing according to Claim 4, **characterized in that**, in the case of an eccentric arrangement of the bearing rings (2, 3) with respect to one another, the greatest spacing (a_{Bex}) between the radially opposite axial rims (13, 15 and 14, 16) of the raceways (11, 12) amounts to between 75% and 90% of the diameter (d_{K}) of the spherical basic shape of the spherical rollers (5).

6. Method for assembling a radial anti-friction bearing having the features of Claim 1, in which method firstly the inner bearing ring (3) is placed into the outer bearing ring (2) and the bearing rings (2, 3) are arranged in an eccentric position with respect to one another on a common radial axis, having the following further steps:
a) inserting a first spherical roller (5), in a tangential position of the side surfaces (6, 7) with respect to the bearing rings (2, 3), at the point of the greatest spacing (a_{Bex}) of the radially opposite rims (13, 15 and 14, 16) of the bearing rings (2, 3),
b) tilting the first spherical roller (5) through 90° into the raceways (11, 12) of the bearing rings (2, 3) into a position perpendicular thereto, and moving the spherical roller (5) in said position into a first lateral intermediate position between the bearing rings (2, 3),
c) inserting a second spherical roller (5), in the tangential position of the side surfaces (6, 7) with respect to the bearing rings (2, 3), at the point of the greatest spacing (a_{Bex}) of the radially opposite rims (13, 15 and 14, 16) of the bearing rings (2, 3),
d) tilting the second spherical roller (5) through 90° into the raceways (11, 12) of the bearing rings (2, 3) into a position perpendicular thereto, and moving the spherical roller in said position into a second lateral intermediate position between the bearing rings (2, 3),
e) repeating steps a) and b) and also c) and d) in alternating fashion until the radial anti-friction bearing (1) is filled to the maximum possible extent with spherical rollers (5), and subsequently moving the inner bearing ring (3) into a position in which it is concentric with respect to the outer bearing ring (2),
f) distributing all the inserted spherical rollers (5), in the position perpendicular to the raceways (11, 12), about the entire circumference of the raceways (11, 12) of the bearing rings (2, 3) with uniform spacings,
g) rotating the inserted spherical rollers (5) through 90° into their operating position arranged longitudinally with respect to the raceways (11, 12), and finally inserting the bearing cage (4) through the spacing (a_{B}) between the rims (13, 14 and 15, 16) of the bearing rings (2, 3).

## Revendications

1. Palier à roulement radial, en particulier roulement à rouleaux sphériques à une seule rangée, qui se compose essentiellement d'une bague de palier externe (2) et d'une bague de palier interne (3) ainsi que d'une pluralité de rouleaux sphériques (5) disposés entre ces bagues de palier (2, 3) et maintenus à distance uniforme les uns des autres par une cage de palier (4) dans la direction périphérique, lesquels présentent à chaque fois deux faces latérales (6, 7) aplaties symétriquement depuis une forme de base sphérique et disposées parallèlement l'une à l'autre, et qui roulent avec leurs surfaces de roulement (8) dans deux pistes de roulement (11, 12) en forme de gorges pratiquées dans le côté interne (9) de la bague de palier externe (2) et dans le côté externe (10) de la bague de palier interne (3), les pistes de roulement (11, 12) étant limitées à chaque fois par deux bords axiaux (13, 14 et 15, 16), la largeur (b_{K}) des rouleaux sphériques (5) entre leurs faces latérales (6, 7) correspondant au moins à 70% du diamètre (d_{K}) de leur forme de base sphérique et étant supérieure à la distance (a_{B}) entre les bords axiaux (13, 15 et 14, 16) opposés radialement des pistes de roulement (11, 12) dans les bagues de palier (2, 3), **caractérisé en ce que** les pistes de roulement (11, 12) sont réalisées dans les deux bagues de palier (2, 3) avec une largeur (b_{LA}, b_{LI}) et une profondeur (t_{LA}, t_{LI}) extrêmement agrandies de telle sorte que les rouleaux sphériques (5), même en cas de contraintes axiales variables, soient en contact linéaire complet avec les pistes de roulement (11, 12) suivant un angle de pression fonctionnel allant jusqu'à 25 degrés de part et d'autre de l'axe longitudinal (17) du palier, avec leurs surfaces de roulement (8) dans les bagues de palier (2, 3), et que la distance (a_{B}) entre les bords axiaux (13, 15 et 14, 16) opposés radialement des pistes de roulement (11, 12) dans les bagues de roulement (2, 3) soit en l'occurrence si petite que la distance (a_{Bex}) même dans le cas de bagues de palier (2, 3) disposées de manière excentrées l'une par rapport à l'autre, soit inférieure au diamètre (d_{K}) de la forme de base sphérique des rouleaux sphériques (5).

2. Palier à roulement radial selon la revendication 1, **caractérisé en ce que** les pistes de roulement (11, 12) dans le côté interne (9) de la bague de palier externe (2) et dans le côté externe (10) de la bague de palier interne (3) présentent une profondeur (t_{LA}, t_{LI}) supérieure à 25% du diamètre (d_{K}) de la forme de base sphérique des rouleaux sphériques (5).

3. Palier à roulement radial selon la revendication 2, **caractérisé en ce que** les pistes de roulement (11, 12) dans le côté interne (9) de la bague de palier externe (2) et dans le côté externe (10) de la bague de palier interne (3) présentent une largeur (b_{LA}, b_{LI}) supérieure à 85% du diamètre (d_{K}) de la forme de base sphérique des rouleaux sphériques (5).

4. Palier à roulement radial selon la revendication 3, **caractérisé en ce que** dans le cas d'un agencement concentrique des bagues de palier (2, 3) l'une par rapport à l'autre, la distance (a_{B}) entre les bords axiaux (13, 15 et 14, 16) opposés radialement des pistes de roulement (11, 12) ne vaut qu'environ 40% à 50% du diamètre (d_{K}) de la forme de base sphérique des rouleaux sphériques (5).

5. Palier à roulement radial selon la revendication 4, **caractérisé en ce que** dans le cas d'un agencement excentrique des bagues de palier (2, 3) l'une par rapport à l'autre, la plus grande distance (a_{Bex}) entre les bords axiaux (13, 15 et 14, 16) opposés radialement des pistes de roulement (11, 12) vaut entre 75% et 90% du diamètre (d_{K}) de la forme de base sphérique des rouleaux sphériques (5).

6. Procédé de montage d'un palier à roulement radial ayant les caractéristiques de la revendication 1, dans lequel on effectue tout d'abord l'insertion de la bague de palier interne (3) dans la bague de palier externe (2) et l'agencement des bagues de palier (2, 3) dans une position excentrique l'une par rapport à l'autre sur un axe radial commun, comprenant les étapes supplémentaires suivantes :
a) insertion d'un premier rouleau sphérique (5) dans une position tangentielle des faces latérales (6, 7) par rapport aux bagues de palier (2, 3) à l'endroit de la plus grande distance (a_{Bex}) des bords opposés radialement (13, 15 et 14, 16) des bagues de palier (2, 3),
b) basculement du premier rouleau sphérique (5) de 90° dans les pistes de roulement (11, 12) des bagues de palier (2, 3) dans une position transversale à celles-ci, et déplacement du rouleau sphérique (5) dans cette position dans une première position intermédiaire latérale entre les bagues de palier (2, 3),
c) insertion d'un deuxième rouleau sphérique (5) dans une position tangentielle des faces latérales (6, 7) par rapport aux bagues de palier (2, 3) à l'endroit de la plus grande distance (a_{Bex}) des bords opposés axialement (13, 15 et 14, 16) des bagues de palier (2, 3),
d) basculement du deuxième rouleau sphérique (5) de 90° dans les pistes de roulement (11, 12) des bagues de palier (2, 3) dans une position transversale à celles-ci, et déplacement du rouleau sphérique dans cette position dans une deuxième position intermédiaire latérale entre les bagues de palier (2, 3),
e) répétition alternée des étapes a) et b) ainsi que c) et d) jusqu'au remplissage maximal possible du palier à roulement radial (1) avec des rouleaux sphériques (5) et déplacement subséquent de la bague de palier interne (3) dans une position concentrique à la bague de palier externe (2),
f) répartition de tous les rouleaux sphériques utilisés (5) dans la position transversale aux pistes de roulement (11, 12), sur toute la périphérie des pistes de roulement (11, 12) des bagues de palier (2, 3), à distances uniformes,
g) rotation des rouleaux sphériques utilisés (5) de 90° dans leur position fonctionnelle disposée longitudinalement par rapport aux pistes de roulement (11, 12) et insertion subséquente de la cage de palier (4) à travers la distance (a_{B}) entre les bords (13, 14 et 15,16) des bagues de palier (2, 3).
